# EUROPEAN PATENT APPLICATION

(11) **EP 2 728 773 A1**
(43) Date of publication of application: **07.05.2014**
(21) Application number: 12191465.9
(22) Date of filing: 06.11.2012
(51) Int. Cl.: H04H 60/52, H04H 60/64

(54) **Method and device for allowing mobile communication equipments to access to multimedia streams played on multimedia screens**

(71) Applicant: Alcatel Lucent, 75007 Paris (FR)
(72) Inventor: Delegue, Gérard, 91620 Nozay (FR); Nouri, Marwen, 91620 Nozay (FR)
(74) Representative: Camus, Olivier Jean-Claude

(57) **Abstract**

A device (D) is intended for providing information relative to multimedia streams, played on multimedia screens (MS) set in known locations, to mobile communication equipments (E). This device (D) comprises a first searching means (SM1) arranged for determining a structured description of a location of a multimedia screen (MS) from a first location description provided by a mobile communication equipment (E), and a second searching means (SM2) arranged for determining a session description of a multimedia stream, that is currently played during a session by this multimedia screen (MS), from this determined structured description, in at least one database (DB1) storing structured descriptions of registered multimedia screens in correspondence with session descriptions, and for providing this session description to the mobile communication equipment (E), so that it could access to the multimedia stream.

## Description

### Technical field

The present invention relates to multimedia content access, and more precisely to the access to multimedia streams, played on multimedia screens, by mobile communication equipments.

### Background of the invention

Multimedia screens allowing displaying multimedia contents are proliferating, notably in video conferencing room, in towns, in malls, in buildings, or in transport stations. This allows a lot of persons present in the same area to watch a same multimedia content in the same time. Unfortunately, some of these persons cannot stay near the same multimedia screen for a long time and then cannot watch a displayed multimedia content till the end.

If these persons could access with their mobile communication equipments to the session during which this multimedia content is displayed, they could watch the end thereof. But, most of the time a multimedia screen does not display any information allowing a mobile communication equipment joining a session.

It is recalled that to be able to play a multimedia stream, a mobile communication equipment needs to know either information describing a session, such as streaming media initialization parameters (time during which the session is active, and a media description), or indexing service information, such as a name or key words or a sub-sequence captured by means of a computer vision tool, if the multimedia content (concerned by this multimedia stream) is already indexed (which appears to be rare).

To allow a mobile communication equipment to get information relative to a multimedia stream played on a multimedia screen, it could establish a short distance communication (for instance Bluetooth or WiFi) with the multimedia screen. However this type of pairing based solution needs an interface between the multimedia screen and the mobile communication equipment and a specific hardware allowing the multimedia screen to establish several connections in parallel. Moreover, in some situations the definition of proximity cannot be clearly defined, notably when the user is in movement or cannot move near the multimedia screen.

Theoretical solutions have been also proposed, but they do not address the case when the desired multimedia content is not preprocessed to extract features allowing searching it by filming a subsequence.

### Summary of the invention

So, an objective of the invention is to improve the situation, and notably to allow a mobile communication equipment to retrieve session information allowing it to play or to retrieve a multimedia stream based on the place where it is played.

More precisely, the invention notably provides a method, intended for providing information relative to a multimedia stream, played during a session on a multimedia screen set in a location, to a mobile communication equipment, and comprising:
- a step (i) during which one determines a structured description of this multimedia screen location from a first location description provided by the mobile communication equipment, and
- a step (ii) during which one determines a session description of a multimedia stream that is currently played by the multimedia screen from this determined structured description in at least one database storing structured descriptions of registered multimedia screens in correspondence with session descriptions, and then one provides this session description to the mobile communication equipment, so that it could access to the multimedia stream (to store or play the multimedia content it comprises).

The method according to the invention may include additional characteristics considered separately or combined, and notably:
- each structured description may be chosen in a group comprising at least a textual description of the multimedia screen location, a set of geographical coordinates of the multimedia screen location, and an illustration of the multimedia screen location;
- each first location description may be chosen in a group comprising at least a textual description of the multimedia screen location, a set of geographical coordinates of the multimedia screen location, and an illustration of the multimedia screen location;
- each structured description may be defined and stored during a registration phase;
- each session description may comprise information allowing the mobile communication equipment to play the multimedia stream and chosen in a group comprising at least values relative to the session, the time during which the session is active, and a media description.

The invention also provides a device, intended for providing information, relative to multimedia streams played on multimedia screens set in known locations, to mobile communication equipments, and comprising:
- a first searching means arranged for determining a structured description of a location of a multimedia screen from a first location description provided by a mobile communication equipment, and
- a second searching means arranged for determining a session description of a multimedia stream, that is currently played during a session by this multimedia screen, from the determined structured description, in at least one database storing structured descriptions of registered multimedia screens in correspondence with session descriptions, and for providing this session description to the mobile communication equipment, so that it could access to the multimedia stream (to store or play the multimedia content it comprises).

The device according to the invention may include additional characteristics considered separately or combined, and notably:
- it may further comprise a recording means arranged for storing a new structured description of a multimedia screen in correspondence with a session description of a multimedia stream played by this multimedia screen, in a local database;
   ➢ its first searching means may be arranged for starting to determine the structured description into the local database, and, if it does not succeed, for determining this structured description through a server having access to at least one other local database storing structured descriptions of registered multimedia screens in correspondence with session descriptions;
   ➢ its second searching means may be arranged for starting to determine the session description into the local database, and, if it does not succeed, for determining this session description through a server having access to at least one other local database storing structured descriptions of registered multimedia screens in correspondence with session descriptions;
- its first searching means may be arranged for transmitting at least one list of information, relative to the multimedia screen location and determined into a database from the first location description, to the mobile communication equipment, in the case where this first description is not precise enough to allow an unambiguous determination of the structured description.

The invention also provides a service server comprising a device such as the one above introduced.

### Brief description of the figures

Other features and advantages of the invention will become apparent on examining the detailed specifications hereafter and the appended drawings, wherein:
- figure 1 schematically and functionally illustrates an example of telecommunication system comprising a transport network, two service servers, equipped with an example of embodiment of a device according to the invention, a content server, a multimedia screen, a smart server and three communication equipments, and
- figure 2 schematically illustrates an example of sequence diagram allowing implementation of a method according to the invention in the telecommunication system illustrated in figure 1.

### Detailed description of the preferred embodiment

The appended drawings may serve not only to complete the invention, but also to contribute to its understanding, if need be.

The invention aims, notably, at offering a method, and an associated device D, intended for providing information relative to multimedia streams, played during sessions on multimedia screens MS set in known locations, to mobile communication equipments E.

In the following description it will be considered that the mobile communication equipment E is a smartphone. But the invention is not limited to this type of mobile communication equipment. Indeed, it concerns any type of mobile communication equipment capable of receiving multimedia contents (notably in a streaming mode) and of displaying these multimedia contents onto a screen. So a mobile communication equipment could be also a tablet-pc or a laptop, for instance.

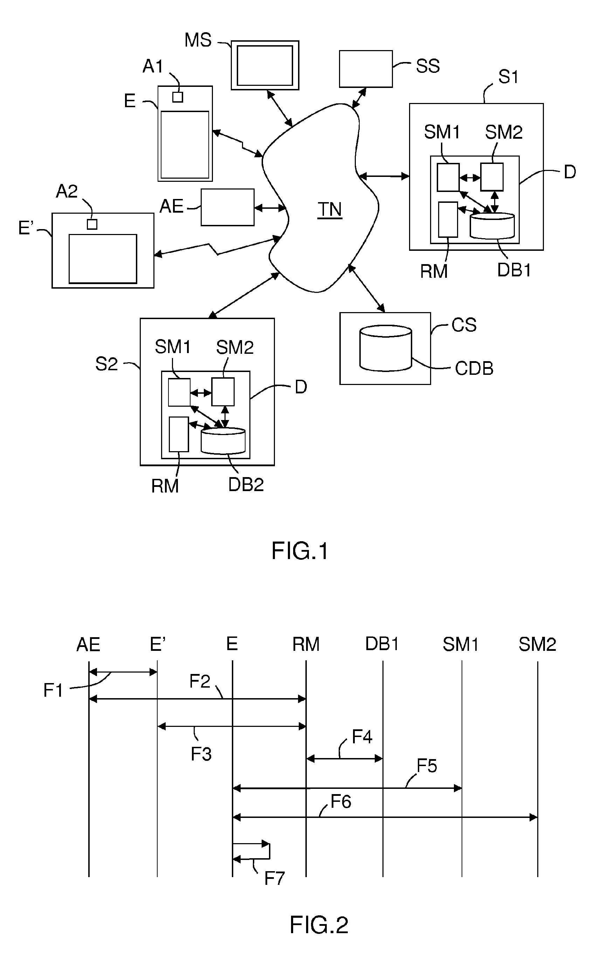

An example of telecommunication system capable of implementing the invention is illustrated in figure 1. This (telecommunication) system comprises a transport network TN (with wireless capacities) to which are coupled a content server CS, two service servers S1 and S2, a smart server SS, a mobile communication equipment E, a multimedia screen MS and two communication equipments E' and AE.

It is important to note that a telecommunication system does not need comprising so many equipments to be capable of implementing the invention. Indeed it only needs a transport network TN, at least one content server CS, at least one service server S1, at least one multimedia screen MS, and at least one mobile communication equipment E.

The transport network TN can be a combination of wired and wireless networks.

The content server CS comprises a storage means CDB with a (very) high storage capacity for storing files of data defining multimedia contents that can be, notably, displayed onto multimedia screens MS. This storage means CDB may be a database, for instance.

The multimedia screen MS is an equipment set in a known location and capable of displaying multimedia content(s) contained into multimedia stream(s), for instance originating from a content server CS, during a session. This multimedia screen MS may be controlled by a screen manager.

Each service server S1, S2 comprises a device D according to the invention that will be described below. It is, for instance, a web server associated to a known URL ("Uniform Resource Locator") allowing a communication equipment to reach it.

The method, according to the invention, comprises at least two steps (i) and (ii), which may be implemented by at least one service server S1, S2, comprising a device D, and a mobile communication equipment E, as illustrated in figure 1.

The first step (i) is initiated when a user of a mobile communication equipment E has decided to access to a multimedia content that is transmitted to a multimedia screen MS in a multimedia stream during a session and currently displayed on this multimedia screen MS, in order either to receive the remaining part of this multimedia stream to watch the remaining part of the multimedia content it contains on the screen of his mobile communication equipment E, or to get this multimedia content to store it and then watch it later on onto the screen of his mobile communication equipment E. In this situation, the user provides a first location description, describing at least partly the place where the multimedia screen MS is set, to a first dedicated application A1, that is running in his mobile communication equipment E and knows the URL of a service server (for instance the first one S1 or the second one S2) to communicate with it through the transport network TN, on request of the user.

It is important to note that the user does not need to be mandatorily in the vicinity of the multimedia screen MS. Indeed, he may be far away from this multimedia screen MS as soon as he knows a first location description of this multimedia screen MS.

For instance, a first location description may comprise a textual description of a multimedia screen location and/or a set of geographical coordinates of a multimedia screen location (for instance of the GPS type), and/or an illustration of a multimedia screen location sketched on the screen of the mobile communication equipment E (map or drawing) or taken with a micro camera of the mobile communication equipment E.

During the first step (i) one determines a structured description of the multimedia screen location from the first location description that has been provided by the mobile communication equipment E.

This determination can be carried out by the device D equipping the concerned service server S1 or S2, and more precisely by a first searching means SM1 it comprises, upon receipt of the first location description from the mobile communication equipment E.

For instance, a structured description may comprise a textual description of a multimedia screen location and/or a set of geographical coordinates of a multimedia screen location (for instance of the GPS type (latitude, longitude and possibly elevation (for instance to discriminate floors of a building))), and/or an illustration of a multimedia screen location (for instance a drawing, a map, a floor map, or a picture taken with a camera).

Also, for instance, each structured description can be defined and stored into a database DB1 or DB2 during a registration phase. As illustrated in the non-limiting example of figure 1, this database DB1 (or DB2) may be part of a device D. But this is not mandatory. Indeed, it could be part of a service server S1 or S2 or of another dedicated and centralized server.

A registration phase can be controlled by a device D, and more precisely by a recording means RM it comprises, upon receipt of a registration request originating from a communication equipment E', through the transport network TN.

For instance, a registration phase can be initiated by a screen manager by means of a dedicated application A2 running into his communication equipment E'. At a chosen time, this screen manager may define a structured definition of a multimedia screen MS, he controls and that is set in a known location, by means of the dedicated application A2, in order the latter (A2) transmits it into a registration request to a communication equipment AE of an area administrator, for instance. If this area administrator authorizes such a requested registration, he uses his communication equipment AE to inform a service server S1 or S2, and more precisely the registration means RM of its device D, that it is authorized to register a new structured definition of a multimedia screen MS originating from the communication equipment E' of a designated screen manager. So, when the registration means RM receives such a registration request, comprising a new structured description of a multimedia screen MS associated with a session description of a multimedia stream that will be played by this multimedia screen MS, it stores this new structured description in correspondence with its associated session description in a database DB1 or DB2. This database may be a local one if there exists several service servers S1, S2 (as illustrated), or a centralized one if there exists only one centralized service server.

Before proceeding to the storage, the registration means RM may check the consistency of the structured description by means of rule(s). For instance, a new area described by geographical coordinates and declared as a child of an existing area must be geographically included in this existing area.

For instance, a session description may comprise information allowing a mobile communication equipment E to access to a multimedia stream played during a session (to store or play the multimedia content it comprises). So this information may be values relative to the session concerned by the multimedia stream (such as a session identifier, a protocol version, a requested bandwidth, for instance) and/or the time during which this session is active, and/or a media description (such as a media name, a transport address, session attributes (the assigned port for streaming and a chosen codec with a sampling rate), for instance).

A more detailed example of session description is described in RFC 4566.

In the case where the telecommunication system comprises several "local" service servers S1, S2 comprising respectively devices D with a local database DB1, DB2, the first searching means SM1, equipping the service server (for instance the first one S1) having received the first location description from a mobile communication equipment E, is arranged for starting to determine the structured description into the local database (here DB1) associated to its device D. If it does not succeed to determine this structured description into the local database DB1, then it may try to determine it through a server SS having access to at least one other local database (here DB2).

This server SS may be a dedicated smart server connected to the transport network TN and having access to several local service servers S1 and S2, or it may be another local service server (here S2). In fact a dedicated smart server SS is really useful when the telecommunication system comprises at least three local service servers, each associated to a local database. When the smart server SS is invoked, it is in charge of finding the local service server capable of providing the searched information that the preceding local service server has not provided.

For instance, the server SS and the service servers Si may be organized in a hierarchical manner. In this case, each service server Si may be in charge of the multimedia screens MS located in a chosen first area, and each "parent" server SSj may be in charge of the multimedia screens MS located in a chosen second area comprising several chosen first areas. So, if a service server Si does not succeed to determine a structured description into its associated local database DBi, then it may try to determine it near its parent server SSj. If the latter SSj does not succeed to determine the searched structured description into its own associated local database DBj, then it may try to determine it near another service server Si whose associated first area is comprised into its own associated second area. Now, if this last search failed, the parent server SSj may try to determine the searched structured description near its own parent server SSk which is associated to a chosen third area comprising notably its own second area, and so on. Moreover, when a service servers Si extends its first area, it has to inform its parent server SSj of this extension.

It is important to note that it may be impossible for a first searching means SM1 to determine directly a structured description only from a received first location description. So, a first searching means SM1 is preferably arranged for transmitting at least one list of information, relative to a multimedia screen location and determined into a database DB1 or DB2 from a received first location description, to the concerned mobile communication equipment E, in the case where this first description is not precise enough to allow an unambiguous determination of a structured description.

For instance, it may transmit to the concerned mobile communication equipment E at least one list of textual descriptions of the multimedia screen location and/or at least one list of geographical coordinates of the multimedia screen location (for instance of the GPS type), and/or at least one list of files of illustrations of the multimedia screen location (drawings and/or maps and/or pictures).

Several iterations between the mobile communication equipment E and the service server S1, S2 can be necessary in order to fully determine the structured description. After each iteration, the structured description may be detailed.

In the second step (ii) of the method, one determines a session description of a multimedia stream, that is currently played by the considered multimedia screen MS, from the structured description determined during the first step (i), in at least one database DB1 or DB2. Then, one provides the determined session description to the concerned mobile communication equipment E, through the transport network TN, so that it could access to the multimedia stream (to store or play the multimedia content it comprises).

This determination can be carried out by the device D equipping the service server (for instance the first one S1 or the second one S2) that has received the first location description, and more precisely by a second searching means SM2 it comprises, once the associated first searching means SM1 has determined a structured description from this first location description.

In the case where the telecommunication system comprises several "local" service servers S1, S2 comprising respectively devices D with a local database DB1, DB2, the second searching means SM2, equipping the service server (for instance the first one S1) having received the first location description from a mobile communication equipment E, is arranged for starting to determine the session description into the local database (here DB1) associated to its device D. If it does not succeed to determine this session description into the local database DB1, then it may try to determine it through a server having access to at least one other local database (here DB2). As mentioned before, this server may be the dedicated smart server SS or another local service server (here S2).

Each device D can be made of software modules. But it may be also made of a combination of software modules and electronic circuit(s) or hardware modules.

A non-limiting example of sequence diagram allowing implementation of the method in the telecommunication system of figure 1 is illustrated in figure 2.

In this example of diagram, a screen manager first initiates a registration phase by means of his communication equipment E'. So, in a first sequence (arrow F1) his communication equipment E' transmits a registration request to a communication equipment AE of an area administrator to be authorized to proceed to the registration of a structured definition of a multimedia screen MS associated with a session description of a multimedia stream that will be played by this multimedia screen MS.

If this area administrator authorizes such a requested registration, he orders to his communication equipment AE to inform the registration means RM of the device D of a first service server S1 that it is authorized to register a new structured definition of a multimedia screen MS originating from the communication equipment E' of a designated screen manager (arrow F2).

Then, the communication equipment E' transmits a registration request (comprising a new structured description of a multimedia screen MS associated with a session description of a multimedia stream that will be played by this multimedia screen MS), to the registration means RM of the first service server S1 (arrow F3). Then, this registration means RM stores this new structured description in correspondence with its associated session description in its associated local database DB1 (arrow F4).

Later on, the user of a mobile communication equipment E arrives in the vicinity of the registered multimedia screen MS and watches the multimedia content it displays. As he cannot stay there, he provides his mobile communication equipment E with a first location description of this multimedia screen MS so that it could be transmitted to the first service server S1 (arrow F5).

Then, the first searching means SM1 of the device D of the first service server S1 determines a structured description of the multimedia screen location from the first location description provided by the mobile communication equipment E. As mentioned before this determination may be carried out into the local database DB1, or in another local database DB2, via the possible smart server SS, if the searched structured description cannot be found into the local database DB1. As also mentioned before, this determination may be directly determined from the received first location description, without any other intervention of the user. But, in the case where the first searching means SM1 cannot determine directly the searched structured description from the received first location description, it may transmit at least one list of information, relative to the multimedia screen location and determined into a database DB1 or DB2 from a received first location description, to the mobile communication equipment E of the user.

Once the first searching means SM1 has determined the structured description, the associated second searching means SM2 determines the associated session description. As mentioned before this determination may be carried out into the local database DB1, or in another local database DB2, via the possible smart server SS, if the searched session description cannot be found into the local database DB1.

Once the second searching means SM2 has determined the session description, it orders its first service server S1 to transmit it to the mobile communication equipment E, through the transport network TN (arrow F6).

Then the mobile communication equipment E may use the session description to join the determined session and start playing the associated multimedia stream on its screen (arrow F7).

This invention offers several advantages, and notably:
- it enables to retrieve an unknown multimedia content from its display location, without knowing its session,
- it does not need specific hardware adaptations, either in the multimedia screen or in the mobile communication equipment (no need of Bluetooth, WiFi or specific configuration between the two equipments),
- it allows a user to continue watching a multimedia content without needing to stay in the vicinity of a multimedia screen, or to watch a multimedia content without being located near a multimedia screen that is playing this multimedia content.

The invention is not limited to the embodiments of method and device described above, only as examples, but it encompasses all alternative embodiments which may be considered by one skilled in the art within the scope of the claims hereafter.

## Claims

1. Method for providing information, relative to a multimedia stream played during a session on a multimedia screen (MS) set in a location, to a mobile communication equipment (E), said method comprising a step (i) during which one determines a structured description of said multimedia screen location from a first location description provided by said mobile communication equipment (E), and a step (ii) during which one determines a session description of a multimedia stream, that is currently played by said multimedia screen (MS), from said determined structured description, in at least one database (DB1) storing structured descriptions of registered multimedia screens in correspondence with session descriptions, and then one provides said session description to said mobile communication equipment (E), so that it could access to said multimedia stream.

2. Method according to claim 1, wherein said structured description is chosen in a group comprising at least a textual description of said location, a set of geographical coordinates of said location, and an illustration of said location.

3. Method according to one of claims 1 and 2, wherein said first location description is chosen in a group comprising at least a textual description of said location, a set of geographical coordinates of said location, and an illustration of said location.

4. Method according to one of claims 1 to 3, wherein each structured description is defined and stored during a registration phase.

5. Method according to one of claims 1 to 4, wherein said session description comprises information allowing said mobile communication equipment (E) to play said multimedia stream and chosen in a group comprising at least values relative to said session, the time during which said session is active, and a media description.

6. Device (D) for providing information relative to multimedia streams, played during sessions on multimedia screens (MS) set in known locations, to mobile communication equipments (E), said device (D) comprising a first searching means (SM1) arranged for determining a structured description of a location of a multimedia screen (MS) from a first location description provided by a mobile communication equipment (E), and a second searching means (SM2) arranged for determining a session description of a multimedia stream, that is currently played during a session by said multimedia screen (MS), from said determined structured description, in at least one database (DB1) storing structured descriptions of registered multimedia screens in correspondence with session descriptions, and for providing said session description to said mobile communication equipment (E), so that it could access to said multimedia stream.

7. Device according to claim 6, wherein it further comprises a recording means (RM) arranged for storing in a local database (DB1) a new structured description of a multimedia screen (MS) in correspondence with a session description of a multimedia stream played by said multimedia screen (MS).

8. Device according to claim 7, wherein said first searching means (SM1) is arranged for starting to determine said structured description into said local database (DB1), and, if it does not succeed, for determining this structured description through a server (S2) having access to at least one other local database (DB2) storing structured descriptions of registered multimedia screens in correspondence with session descriptions.

9. Device according to one of claims 7 and 8, wherein said second searching means (SM2) is arranged for starting to determine said session description into said local database (DB1), and, if it does not succeed, for determining this session description through a server (SS) having access to at least one other local database (DB2) storing structured descriptions of registered multimedia screens in correspondence with session descriptions.

10. Device according to one of claims 6 to 9, wherein said first searching means (SM1) is arranged for transmitting at least one list of information, relative to said multimedia screen location and determined into a database (DB1) from said first location description, to said mobile communication equipment (E), in the case where said first location description is not precise enough to allow an unambiguous determination of said structured description.

11. Service server (S1, S2), wherein it comprises a device (D) according to one of claims 6 to 10.
